# EUROPEAN PATENT SPECIFICATION

(11) **EP 3 672 264 B1**
(45) Date of publication and mention of the grant of the patent: **06.04.2022**
(21) Application number: 18213942.8
(22) Date of filing: 19.12.2018
(51) Int. Cl.: H04N 21/438, H04H 60/43, H04N 21/258, H04N 21/482, H04H 60/68, H04N 21/2665, H04N 21/462

(54) **SIGNAL RECEIVER AND METHOD OF OPERATION**
SIGNALEMPFÄNGER UND VERFAHREN ZUM BETRIEB
RÉCEPTEUR DE SIGNAL ET PROCÉDÉ DE FONCTIONNEMENT

(43) Date of publication of application: 24.06.2020
(73) Proprietor: Vestel Elektronik Sanayi ve Ticaret A.S., 45030 Manisa (TR)
(72) Inventor: ISIK, Sacide Simge, 45030 Manisa (TR); ÖZDEMÍR, Özkan, 45030 Manisa (TR)
(74) Representative: Flint, Adam

(56) References cited:
- EP-A1- 2 107 704
- EP-A2- 2 603 010
- WO-A1-01/28093
- WO-A1-2015/106818

## Description

### Technical Field

The present disclosure relates to a signal receiver for receiving broadcast signals and a method of operating a signal receiver.

### Background

When first setting up a signal receiver for receiving broadcast signals, such as for example a television set, a set-top box, a PVR (personal video recorder, also known as a DVR or digital video recorder), an expansion card for a computer, etc., it is necessary for the signal receiver to search for available channels. It is also necessary for the signal receiver to search for channels from time to time after an initial set up stage, for example because new channels are added or channels are removed, and because channels can be moved to different broadcast frequencies or other some other property of the transmission has changed.

A channel search can return a large number of channels, potentially up to several hundreds or even thousands of channels. Many signal receivers provide users with the functionality to order the channels in a channel list freely according to the user's choice. For example, the user can set their favourite channels to occur first in the channel list, with less commonly used channels being placed further down the list. However, the large number of available channels makes this a time-consuming and tedious task. A particular problem arises in some circumstances when the user would like to order the channels in the channel list according to whether the channel is a national channel or a local channel.

WO0128093A1 discloses assigning program locations in a receiver to individual received broadcast signals in accordance with predetermined assignment rules where the broadcast signals originate from various transmitters.

EP2603010A2 discloses a method for operating an image display apparatus which includes entering channel scan mode, receiving a broadcast signal of a detected broadcast channel in the channel scan mode, extracting, in the presence of an image representing a channel name in a broadcast image of the broadcast signal, the image representing a channel name from the broadcast image, determining channel number information and channel name information about the broadcast channel based on the extracted image, and storing the channel number information and the channel name information about the broadcast channel in a channel map.

EP2107704A1 discloses a method of sharing channel information for a client device coupled to a server including a plurality of communities.

### Summary

According to a first aspect disclosed herein, there is provided a method of operating a signal receiver according to claim 1.

In an example, in response to the querying of the database, the signal receiver receives from the database an indication whether the channel is a national channel or a local channel for at least some of the channels, the channels further being ordered in the channel list according to whether the channel is a national channel or a local channel.

In an example, in response to the querying of the database, the signal receiver receives from the database an indication of priority for at least some of the channels, the channels further being ordered in the channel list according to the priority of the channels.

In an example, the channel list contains a plurality of sections, wherein each channel is allocated to one of the sections based on at least the geographical location of the signal receiver and the geographical location data for the channels obtained from the database.

In an example, in response to the querying of the database, the signal receiver receives from the database an indication whether the channel is a national channel or a local channel for at least some of the channels; and each channel is allocated to one of the sections based on at least the geographical location of the signal receiver and the geographical location data for the channels obtained from the database and whether the channel is a national channel or a local channel.

In an example, in response to the querying of the database, the signal receiver receives from the database an indication of priority for at least some of the channels; and wherein the channels within each section are ordered according to the priority of said channels within the section.

In an example, acquiring location data for the signal receiver comprises performing an Internet Protocol, IP, address look-up for the signal receiver using an IP address of the signal receiver.

According to a second aspect disclosed herein, there is provided a signal receiver according to claim 3.

In an example, the signal receiver is configured such that the channels are further ordered in the channel list according to whether the channel is a national channel or a local channel based on an indication whether the channel is a national channel or a local channel received from said database.

In an example, the signal receiver is configured such that the channels are further ordered in the channel list according to a priority of the channels based on an indication of priority for the channels received from said database.

In an example, the signal receiver is configured such that the channel list contains a plurality of sections, and such that each channel is allocated to one of the sections based on at least the geographical location of the signal receiver and the geographical location data for the channels obtained from said database.

In an example, the signal receiver is configured such that each channel is allocated to one of the sections based on at least the geographical location of the signal receiver and the geographical location data for the channels obtained from said database and whether the channel is a national channel or a local channel in accordance with an indication obtained from said database whether the channel is a national channel or a local channel.

In an example, the signal receiver is configured such that the channels within each section are ordered according to a priority of said channels based on an indication of priority for the channels within the section received from said database.

In an example, the signal receiver is configured to acquire location data for the signal receiver by performing an IP address look-up for the signal receiver using an IP address of the signal receiver.

The signal receiver may be a satellite signal receiver for receiving satellite broadcast television signals.

According to a third aspect disclosed herein, there is provided a database server according to claim 10.

According to a fourth aspect disclosed herein, there is provided a method of operating a database according to claim 15.

### Brief Description of the Drawings

To assist understanding of the present disclosure and to show how embodiments may be put into effect, reference is made by way of example to the accompanying drawing in which:
Figure 1 shows schematically an example of a signal receiver for receiving broadcast signals in accordance with the present disclosure, the signal receiver being in communication with a database;
Figure 2 shows schematically an example of how regions are defined; and.
Figure 3 shows schematically an example of data sent by a signal receiver to a database server.

### Detailed Description

A signal receiver for receiving broadcast or other transmission signals can in general receive and decode one or more of analog, cable, terrestrial, satellite and IPTV (Internet Protocol television) transmissions. As noted, when first setting up a signal receiver for receiving broadcast signals, it is necessary for the signal receiver to search for available channels. It is also necessary for the signal receiver to search for channels from time to time after an initial set up stage, for example because new channels are added or channels are removed, and because channels can be moved to different broadcast frequencies or other some other property of the transmission (such as modulation scheme, or polarisation for satellite broadcasts) has changed.

A channel search can return a large number of channels, potentially up to several hundreds or even thousands of channels. This is the case for any distribution type, including analog, cable, digital terrestrial and Internet, but is particularly true for satellite broadcasts because satellite broadcasts contain many channels because of the large available bandwidth and also satellite broadcasts often cover a large geographical area.

A signal receiver may group channels automatically according to broadcast type. For example, the signal receiver may place satellite channels at the front of the channel list, place cable channels next, followed by terrestrial and then analog channels. However, this is a crude and simple method. It means that if a user wishes to change channel from for example a satellite channel to a terrestrial channel, the user has to skip or move through a large number of channels in the channel list displayed by the signal receiver.

A signal receiver may also sort channels depending on a country, which is preset by the manufacturer. For example, the signal receiver may be provided with a hard-coded algorithm that sorts channels according to country, or possibly according to a (small) number of countries. However, if the signal receiver is sold into or transferred to a different country, then this process fails to operate correctly as desired. Likewise, this option can fail if some broadcast parameter is changed for one or more of the broadcast channels. This may require a software update at the signal receiver to deal with this: This is a particular problem for satellite broadcasts as channel broadcast parameters for satellite broadcasts tends to change frequently. It also means that every signal receiver in a country will provide the same order in the channel list, regardless of the actual location of the signal receiver in the country.

Many signal receivers provide users with the functionality to order the channels in a channel list freely according to the user's choice. For example, the user can set their favourite channels to occur first in the channel list, with less commonly used channels being placed further down the list. However, the large number of available channels makes this a time-consuming and tedious task. A particular problem arises in some circumstances when the user would like to order the channels in the channel list according to whether the channel is a national channel or a local channel. Moreover, especially when the signal receiver is close to a border between different countries, the signal receiver may receive channels that are intended for different countries.

By default, national channels are usually inserted at the beginning of the channel list. However, many local channels may also be broadcast in a particular local area or region or city or the like. The local channels would be found in a channel search and are usually placed at scattered positions throughout the channel list. This can make it difficult for the user has to find local channels in the list and move them to the beginning of the channel list if desired.

In principle at least, digital television transmissions, according to for example DVB (Digital Video Broadcasting) transmissions, include a logical channel number (LCN) for each of the different television programmes that are transmitted. The television programmes are mapped to a channel number based on the LCN data at the receiver. The channel number is typically a number up to three digits long. The channel number can be entered by a user via digits on a receiver's remote control unit or directly on the receiver to select the television programmes that the user wishes to watch. (For convenience, the phrase "television programmes" or similar is often used herein to mean both television and radio programmes and should be interpreted accordingly unless the context requires otherwise.)

In theory, the LCN may be useful for allowing the user to sort at least digital channels as desired. However, the LCN data may be out of date or incorrect (at least in some respects) or missing altogether, particularly for satellite broadcasts. In addition, for digital terrestrial broadcasts, because the transmissions tend to be rather local, the LCN data for different local channels is in general different. However, for satellite broadcasts, because the satellite signals cover such a wide area, there is often no distinction in the LCN (if provided with the transmission) for local channels or local versions of a national channel (for, for example, local news items or local advertising). In any event, broadcasts or other transmissions of analog channels do not contain a LCN.

In a specific example of the present disclosure, in outline a method may proceed as follows:
(i) Install signal receiver.
(ii) Acquire geographic location of signal receiver using for example Internet connection and/or let user select or update location manually.
(iii) Perform automatic channel search (but do not sort the channels that are located).
(iv) Connect to database server, over for example the Internet.
(v) Perform a channel query for every channel that was found.
(vi) Group channels into groups or sections using data returned from the database server.
(vii) Sort channels within the different groups or sections using priority data from obtained from the database server.
(viii) Combine re-ordered group channels to create an overall channel list.

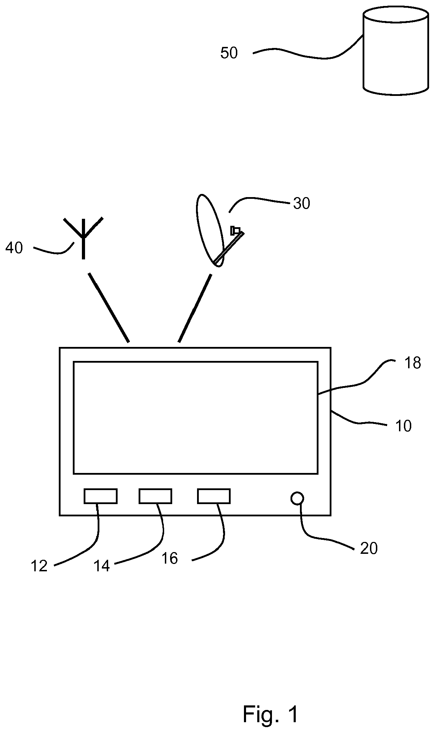

Referring now to Figure 1, this shows schematically an example of a signal receiver 10 for receiving broadcast signals in accordance with the present disclosure. The signal receiver 10 has the usual processor 12, data storage 14, working memory 16, etc. In the example shown, the signal receiver 10 is a television set and therefore also has a display screen 18. In other examples, the signal receiver 10 may be another device that is capable of receiving and decoding, etc., television signals, including for example a set-top box, a PVR (personal video recorder, also known as a DVR or digital video recorder), an expansion card for a computer, etc. In the example shown, the signal receiver 10 has a remote control signal receiver 20 for receiving control signals from a remote control unit (not shown), which is typically a handheld unit which sends control signals to the signal receiver 10 using infrared or the like.

The signal receiver 10 has or is connected to one or more arrangements for receiving transmissions of television and/or radio programmes. In the example shown, the signal receiver 10 has or is connected to a satellite dish 30 for receiving satellite transmissions. In the example shown, the signal receiver 10 also has or is connected to an antenna 40 for receiving terrestrial transmissions. The signal receiver 10 may also have connections for one or more of cable transmissions and the Internet for IPTV. The transmissions in general may be of analog or digital channels, which the signal receiver 10 can decode and display.

As is familiar, when a signal receiver 10 of this type is first set up (by a user, such as an end purchaser) and also thereafter from time to time, it is necessary for the signal receiver 10 to search for available channels. A search is usually manually instigated by the user, using for example menu options provided by the signal receiver 10. However, as noted above, a channel search can return a large number of channels, potentially up to several hundreds or even thousands of channels. Whilst many signal receivers provide users with the functionality to order the channels in a channel list freely according to the user's choice, the large number of available channels makes this a time-consuming and tedious task. This is a particular problem with satellite transmissions, for the reasons mentioned above. A particular problem arises in some circumstances when the user would like to order the channels in the channel list according to whether the channel is a national channel or a local channel.

Accordingly, in an example of the present disclosure, such a search may be part of a method of sorting of channels which proceeds as follows.

First, the signal receiver 10 performs a channel search to identify channel transmissions that can be received. At this point, the signal receiver 10 in an example does not sort the channels that are located in the search.

The signal receiver 10 also obtains location data which indicates the geographical location of the signal receiver 10. In an example, this is carried out by a technical process, examples of which are given below. Alternatively, the user may manually enter location data for the signal receiver 10 into the signal receiver 10, either initially or to override or update location data that is obtained via a technical process. However, manually entering location data is inconvenient for the user and is also prone to human error as it may not be straightforward for many users to find and enter such data, especially as many end users may not be technically proficient.

In one particularly useful example, the location data for the signal receiver 10 is obtained by performing an Internet Protocol (IP) address look-up for the signal receiver 10 using an IP address of the signal receiver 10. IP geolocation for a device that is connected to the Internet maps the IP address of the device to the geographic location of the device. By geographically mapping the IP address, location information for the device can be obtained. Such location information may be or include the country, state/county, city, post code, latitude/longitude, ISP, area code, and other information. It is common these days for a signal receiver 10 of this type to be connected to the Internet, and the IP address of the connected signal receiver 10 can be used to obtain its location data.

As an alternative, the signal receiver 10 may have a GPS (Global Positioning System) or other satellite positioning system which can provide location data for the signal receiver 10.

In either case, the signal receiver 10 may provide the user with an option to override or update location data for the signal receiver 10 that is obtained using a technical process and to enter other location data manually.

The signal receiver 10 is in communication with a database which provides location and other information for channels. The database may be local to the signal receiver 10. Alternatively and as indicated in the example in Figure 1, the database 50 may be remote from the signal receiver 10. For example, the database 50 may be provided by one or more servers with which the signal receiver 10 can communicate remotely, over for example the Internet. The database 50 may be maintained by for example one or more broadcasters or some overarching authority, such as a national regulatory authority or other administrator in the country concerned. Broadcasters may provide the necessary data for the various channels that they broadcast so that the data, which will be required by signal receivers 10 in use, is present in the database 50. The database 50 is updated from time to time as channels and their properties and configurations change.

After the signal receiver 10 has located a channel during the search, the signal receiver 10 sends a query to the database 50, either immediately when the channel is located in the search or when the signal receiver 10 has completed the channel search and located all available channels. Specific examples of such queries will be discussed further below for analog broadcast, cable broadcasts, terrestrial broadcasts and satellite broadcasts. In general, the query includes channel information for the channel located in the channel search. Depending on for example the type of broadcast, such channel information may include one or more of broadcast type, frequency, TV system, channel number, modulation, symbol rate, name of satellite, constellation, TSID (transport stream id or identifier), ONID (original network id), SID (service id), etc. for the channel. Specific examples of such channel information for different broadcast types are discussed below. In an example, this is carried out for all channels located by the signal receiver 10 during the channel search.

The database 50 responds with geolocation data for each channel, which is sent to the signal receiver 10. The signal receiver 10 saves the geolocation data for each channel to its channel list record or own database.

The database 50 may also respond with some additional information which is sent to the signal receiver 10. As one specific example, the database 50 may respond with an indication as to whether the channel is a national channel or a local channel. As another example, the database 50 may respond with an indication as to the priority of sorting of the channel, which will be discussed further below.

This querying of the database 50 for geolocation and other data for a channel is carried out for at least some of the channels that were found in the search and is ideally carried out for all of the channels that were found in the search.

Having obtained the location and other data for some and ideally all of the channels that were located in the search, the signal receiver 10 is now ready to sort the channels. That is, the signal receiver 10 is ready to set an order for the channels in a channel list which is accessible and (typically) viewable by a user. In an example, the order of the channels in the channel list after sorting and ordering of the channels is a function of at least the geographical location of the signal receiver 10 and the geographical location data for the channels obtained from the database 50. In another example, the order of the channels in the channel list after sorting and ordering of the channels is a function also of whether the channel is a national channel or a local channel. In another example, the order of the channels in the channel list after sorting and ordering of the channels is a function also of a priority of the channel. Also, in another example, the channel list may be in discrete sections (such as a first section numbered from 001 to 099, a second section numbered from 100 to 199, etc.). Whilst having sections for the channel list is not essential, it is often used in many countries, and indeed its use is mandatory in some countries, to make it easier for users to locate television programmes or channels of a particular type or genre (such as news programmes, music programmes or children's programmes, etc.). Channels may be sorted within the sections, according to for example the priority of the channels, as discussed further below.

In an example, a first criterion for sorting the channels is based on whether the location of the channel is the same country as the country location of the signal receiver 10. Channels that have the same country as the country location of the signal receiver 10 may for example be presented earlier in the channel list than channels that have a different country from the location of the signal receiver 10.

In an example, a second criterion for sorting the channels is based on whether the channel is a national channel or a local channel, as indicated by the information provided by the database 50. A number of options for sorting the channels in the channel list based in whether they are national channels or local channels are possible, examples of which will be given further below. By convention, national channels tend to be placed first or early in channel lists.

In an example, a third criterion for sorting the channels is based on the specific region of the channel (as obtained from the database 50) and the specific region of the signal receiver 10 (as obtained in one of the ways described above). In particular, channels that have a regional location that is the same as the regional location of the signal receiver 10 are ordered to occur first in the channel list, followed by channels that have a location that is at a first neighbourhood level to the region of the signal receiver 10, followed by channels that have a regional location that is at a second neighbourhood level to the region of the signal receiver 10, etc. The terms "specific region", "neighbour" and "neighbourhood levels" as used in this context will be discussed further below.

In a specific example, the signal receiver 10 may first sort the channels it has located in the channel search into sections or groups as follows, in the following order:
Section 1: If the country of the channel to be sorted is the same as the country of the signal receiver 10 and it is a national channel, place it in the first section of the channel list.
Section 2: If the country of the channel to be sorted is the same as the country of the signal receiver 10 and it is a local channel, and the specific region of the channel is the same as the specific region of the signal receiver 10, place it in a second section of the channel list.
Section 3: If the country of the channel to be sorted is the same as the country of the signal receiver 10 and it is a local channel, and the specific region of the channel is at a first neighbourhood level from the specific region of the signal receiver 10, place it in a third section of the channel list.
Section 4: If the country of the channel to be sorted is the same as the country of the signal receiver 10 and it is a local channel, and the specific region of the channel is at a second neighbourhood level from the specific region of the signal receiver 10, place it in a fourth section of the channel list. (This may be continued for channels having a specific region that is at a third or further neighbourhood level from the specific region of the signal receiver 10, with successive corresponding sections being provided in the channel list.)
Section 5: If the country of the channel to be sorted is a neighbour of the country of the signal receiver 10 and the channel is a national channel, place it in a fifth section of the channel list.
Section 6: If the country of the channel to be sorted is a neighbour of the country of the signal receiver 10 and the channel is a local channel, place it in a sixth section of the channel list.
Section 7: Place any remaining channels in a seventh section of the channel list.

As an option after the channels have been grouped into sections as described, the channels may be ordered within the different sections or groups of the channel list according to the priority information for the channels obtained from the database 50.

Finally, the signal receiver 10 can assemble the whole channel list from the sections described above, and present that channel list to the user. The user can then use that channel list in the form provided or, if the signal receiver 10 provides the functionality, can further sort the order of the channels according to the user's own preference. Either way, notably, national and local or regional channels are already sorted for the user, enabling the user to identify and locate local or regional channels in particular more quickly and easily. Moreover, it may be noted that if for example a channel search is carried out by signal receivers in two different cities in the same country or same region, even if the channels that are found are the same, the channels will be sorted differently: the users in the different cities will have different channel lists, which are already more tailored and appropriate for the different locations of the respective signal receivers.

It is mentioned above that the signal receiver 10 sends a query to the database 50 for (preferably) each channel located in the channel search. In general, different broadcast or transmission types have different parameters. In an example, the signal receiver 10 sends information relating to these parameters which defines the channel to the database server 50. The database server 50 then responds with at least information about whether the channel is national or not and the geographic region for the channel.

Some specific examples of the queries for different broadcast or transmission types are as follows.

Analog Broadcast: Parameters are frequency, TV system and channel number. The signal receiver 10 sends these parameters and the geographic location of the signal receiver 10 to the database server 50. This query may for example be in the form: *get_channel_info(my_location=xxx, type=analog, frequency=xxx, tv_system=xxx, channel_number=xxx).* The geographic location of the signal receiver 10 is required by the database server 50 for comparison with the channel's location to reach a conclusion about neighbourhood and distance. The database server 50 performs this comparison and sends results to the signal receiver 10.

Cable Broadcast: Parameters are frequency, modulation, symbol rate, TSID (Transport Stream ID), ONID (Original Network ID) and SID (Service ID). The signal receiver 10 sends these parameters and the geographic location of the signal receiver 10 to the database server 50. This query may for example be in the form: *get_channe_info(my_location=xxx, type=cable, frequency=xxx, modulation=xxx, symbol_rate=xxx, tsid=xxx, onid=xxx, sid=xxx).* The geographic location of the signal receiver 10 is required by the database server 50 for comparison with the channel's location to reach a conclusion about neighbourhood and distance. The database server 50 performs this comparison and sends results to the signal receiver 10.

Terrestrial Broadcast: Parameters are frequency, channel number, TSID (Transport Stream ID), ONID (Original Network ID) and SID (Service ID). The signal receiver 10 sends these parameters and the geographic location of the signal receiver 10 to the database server 50. This query may for example be in the form: *get_channel_info(my_location=xxx, type=terrestrial, frequency=xxx, channel_number=xxx, tsid=xxx, onid=xxx, sid=xxx).* The geographic location of the signal receiver 10 is required by the database server 50 for comparison with the channel's location to reach a conclusion about neighbourhood and distance. The database server 50 performs this comparison and sends results to the signal receiver 10.

Satellite Broadcast: Parameters are name of satellite, frequency, symbol rate, constellation, TSID (Transport Stream ID), ONID (Original Network ID) and SID (Service ID). The signal receiver 10 sends these parameters and the geographic location of the signal receiver 10 to the database server 50. This query may for example be in the form: *get_channel_info*(*my_location=xxx, type=satellite, satellite_name=xxx, frequency=xxx, polarization=x, symbol_rate=xxx, constellation=x, tsid=xxx, onid=xxx, sid=xxx*)*.* The geographic location of the signal receiver 10 is required by the database server 50 for comparison with the channel's location to reach a conclusion about neighbourhood and distance. The database server 50 performs this comparison and sends results to the signal receiver 10.

In each case, an example of results sent by the database server 50 to the signal receiver 10 is in the form: *channel_info(country=xxx, geo_location=xxx, is_national_channel=x, neighborhood_level=x, priority_rate=x). "country"* holds information about the country of the channel. *"geo_location"* holds information about the geographic region of the channel. *"is_national_channel"* holds information about whether the channel is a national channel or a local channel. *"neighborhood_level"* holds information about the level of geographic neighbourhood (neighbour region of channel or neighbour of neighbour, etc.), as will be discussed further below. *"priority_rate*" holds information which may be used for sorting according to priority when the channels have been grouped, again as will be discussed further below.

Mention is made above of the terms "specific region", "neighbour" and "neighbourhood levels". The "specific region" is typically some region that is smaller than a country. The administrator of the database server 50 may define different specific regions for channels and, likewise for signal receivers 10, differently depending on for example the specific country according to for example geographic conditions, population, channel count distribution, etc. So a "region" may be a city for some countries, may be a geographic region for other countries, may be a state or country or other federal district for yet further countries. Moreover, "regions" may be defined differently for different geographical locations within a country. For example, in a particular country, some "regions" are cities, some are states, some are general areas like "south east", etc.

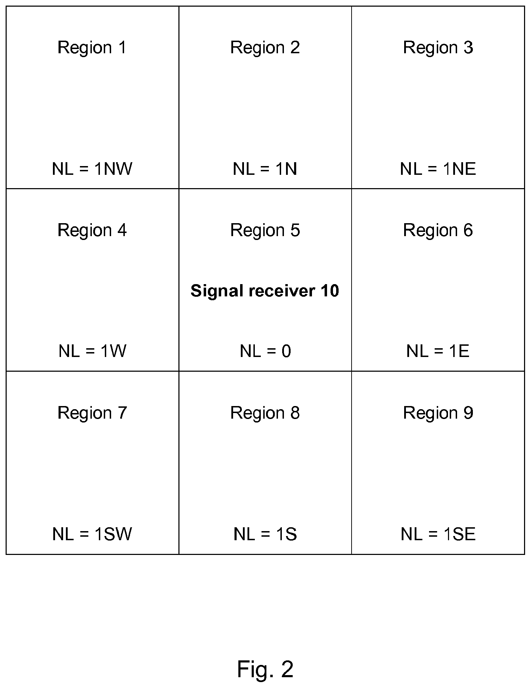

Once the database server 50 has obtained location data for the signal receiver 10, the database server 50 can compare the region of the signal receiver 10 with the regions of the channels. Referring to Figure 2, a particular country may have a number of regions defined (there being nine such regions in the example illustrated in Figure 2). If the region of the signal receiver 10 is the same as the region of the channel, then the neighbour level NL is zero. If the region of the signal receiver 10 is adjacent the region of the channel, then the neighbour level NL is 1. Moreover, in this example, the database server 50 can also indicate the relative geographical locations or direction of the signal receiver 10 and the channel, that is whether for example the location of the channel is North or South East, etc. of the location of the signal receiver 10. For example, referring to Figure 2, the signal receiver 10 is located in Region 5. If the region of the channel is Region 2, which is adjacent to and north of the Region 5, then the neighbour level may be given as "NL = IN"; if the region of the channel is Region 7, which is adjacent to and south-west of the Region 5, then the neighbour level may be given as "NL = 1SW"; etc. For regions that are further out, that is not adjacent to or nearest neighbours of the region of the signal receiver but adjacent to regions that are adjacent to the region of the signal receiver 10, the neighbour level is "2" (optionally with an indication of direction, such as "N" or "SW", etc.). This can in principle be extended to further regions, which extend yet further out.

It is mentioned above that, once the different channels have been allocated to different sections in the channel list, according to for example the geographical location of the signal receiver and the geographical location data for the channels and whether the channel is a national channel or a local channel, the channels may then be sorted within the sections, according to for example the priority of the channels. As mentioned above, the database server 50 may return a value for *"priority_rate*" which may be used for sorting according to priority when the channels have been grouped. A number of ways of determining a priority, that is, the value given in the *priority_rate,* for the channels are possible. In one example, the priority may be calculated as a function of one or more of the content type (e.g. news, documentary, magazine, etc.) of the channel; the resolution of the channel (for example, SD (standard definition), HD (high definition), or UHD (ultra high definition), etc); viewer ratings for the channel; and distance between geographic regions of the channel and the signal receiver 10. For example, a news channel that is in UHD and for which the channel has a geographical location that is close to the location of the signal receiver 10 may be given priority over channels that are further from the signal receiver 10 or are in SD, etc.

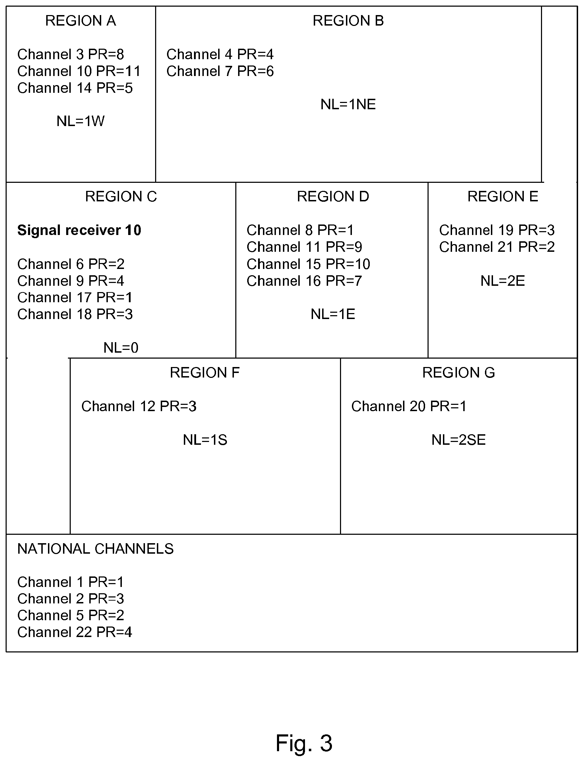

As a worked example to illustrate a specific example, suppose that a signal receiver finds 22 channels during the channel search. The signal receiver 10 connects to the Internet and acquires geographical data which indicates that the signal receiver 10 is located in a region termed Region C. The signal receiver 10 connects to the database server 50 and sends the relevant information for the geographical location of the signal receiver 10 and data for the channels located in the channel search. The database server 50 responds by sending data like that schematically shown in Figure 3 to the signal receiver 10. From this data, the signal receiver 10 groups the channels into sections or groups as follows:
Group 1: Channel-1, Channel-2, Channel-5 and Channel-22
Group 2: Channel-6, Channel-9, Channel-17 and Channel-18
Group 3: Channel-3, Channel-10, Channel-14, Channel-4, Channel-7, Channel-8, Channel-11, Channel-13, Channel-15, Channel-16, Channel-12
Group 4: Channel-19, Channel-21, Channel-20
Group 5: Empty
Group 6: Empty
Group 7: Empty

The signal receiver 10 then sorts or orders the channels within the groups according to the priority of the channel. In this example, the channels are therefore ordered within the groups as follows:
Group 1: Channel-1 (PR=1), Channel-5 (PR=2), Channel-2 (PR=3) and Channel-22 (PR=4)
Group 2: Channel-17 (PR=1), Channel-6 (PR=2), Channel-18 (PR=3) and Channel-9 (PR=4)
Group 3: Channel-8 (PR=1), Channel-13 (PR=2), Channel-12 (PR=3), Channel-4 (PR=4), Channel-14 (PR=5), Channel-7 (PR=6), Channel-16 (PR=7), Channel-3 (PR=8), Channel-11 (PR=9), Channel-15 (PR=10), Channel-10 (PR=11)
Group 4: Channel-20 (PR=1), Channel-21 (PR=2), Channel-19 (PR=3)
Group 5: Empty
Group 6: Empty
Group 7: Empty

Finally, the signal receiver 10 combines these ordered groups to provide a single channel list as set out below, which may be displayed for the user to select a desired channel to view:
#01 Channel-1
#02 Channel-5
#03 Channel-2
#04 Channel-22
#05 Channel-17
#06 Channel-6
#07 Channel-18
#08 Channel-9
#09 Channel-8
#10 Channel-13
#11 Channel-12
#12 Channel-4
#13 Channel-14
#14 Channel-7
#15 Channel-16
#16 Channel-3
#17 Channel-11
#18 Channel-15
#19 Channel-10
#20 Channel-20
#21 Channel-21
#22 Channel-19

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

## Claims

1. A method of operating a signal receiver (10) which is capable of receiving broadcast signals, the method comprising the signal receiver (10):
performing a channel search to search for available channels which can be received by the signal receiver (10);
acquiring location data for the signal receiver (10) which indicates the geographical location of the signal receiver (10);
for each of at least some of the channels located in the channel search, querying a database (50) for geographical location data for the channel which is stored in the database (50);
in response to the querying of the database (50), receiving geographical location data for said channels from the database (50); and
creating a channel list for the channels located in the channel search, wherein channels are ordered in the channel list in accordance with at least the geographical location of the signal receiver (10) and the geographical location data for the channels obtained from the database (50).

2. A method according to claim 1, wherein, in response to the querying of the database (50), the signal receiver (10) receives from the database (50) an indication whether the channel is a national channel or a local channel for at least some of the channels, the channels further being ordered in the channel list according to whether the channel is a national channel or a local channel.

3. A signal receiver (10) which is capable of receiving broadcast signals, the signal receiver (10) being constructed and arranged to:
perform a channel search to search for available channels which can be received by the signal receiver (10);
acquire location data for the signal receiver (10) which indicates the geographical location of the signal receiver (10);
for each of at least some of the channels located in the channel search, query a database (50) for geographical location data for the channel to obtain geographical location data for said channels which is stored in said database (50); and
create a channel list for the channels located in the channel search, wherein the signal receiver (10) orders channels in the channel list in accordance with at least the geographical location of the signal receiver (10) and the geographical location data for the channels obtained from said database (50).

4. A signal receiver (10) according to claim 3, wherein the signal receiver (10) is configured such that the channels are further ordered in the channel list according to whether the channel is a national channel or a local channel based on an indication whether the channel is a national channel or a local channel received from said database (50).

5. A signal receiver (10) according to claim 3 or claim 4, wherein the signal receiver (10) is configured such that the channels are further ordered in the channel list according to a priority of the channels based on an indication of priority for the channels received from said database (50).

6. A signal receiver (10) according to claim 3, wherein the signal receiver (10) is configured such that the channel list contains a plurality of sections, and such that each channel is allocated to one of the sections based on at least the geographical location of the signal receiver (10) and the geographical location data for the channels obtained from said database (50).

7. A signal receiver (10) according to claim 6, wherein the signal receiver (10) is configured such that each channel is allocated to one of the sections based on at least the geographical location of the signal receiver (10) and the geographical location data for the channels obtained from said database (50) and whether the channel is a national channel or a local channel in accordance with an indication obtained from said database (50) whether the channel is a national channel or a local channel.

8. A signal receiver (10) according to claim 6 or claim 7, wherein the signal receiver (10) is configured such that the channels within each section are ordered according to a priority of said channels within the section based on an indication of priority for the channels received from said database (50).

9. A method according to claim 1 or claim 2 or a signal receiver (10) according to any of claims 3 to 8, wherein the signal receiver (10) is a satellite signal receiver for receiving satellite broadcast television signals.

10. A database server for receiving and responding to queries from a signal receiver (10) 2. according to any of claims 3-9 which is capable of receiving broadcast signals, the database server comprising a database (50) for broadcast channels and being configured to:
receive, from the signal receiver (10) which is capable of receiving broadcast signals, a query concerning channels which have been identified in a channel search preformed by the signal receiver (10);
query the database (50) to identify the geographical location data for at least some of said channels which is stored in the database (50); and
respond to the signal receiver (10) with the geographical location data for said channels.

11. A database server according to claim 10, the database server being configured to:
query the database (50) to identify whether at least some of the channels in the query from the signal receiver (10) are national or local channels and to respond to the signal receiver (10) with an indication whether the channel are national channels or local channels for at least some of the channels.

12. A database server according to claim 10 or claim 11, the database server being configured to:
query the database (50) to identify a priority for at least some of the channels and to respond to the signal receiver (10) with an indication of the priority for said channels.

13. A database server according to claim 12, wherein the priority of a channel is calculated as a function of one or more of: the content type of the channel; the resolution of the channel; viewer ratings for the channel; and distance between geographic regions of the channel and the signal receiver (10).

14. A database server according to any of claims 10 to 13, the database server being configured to:
compare the geographical location of the signal receiver (10), which is received in a query from the signal receiver (10), with the geographical location of at least some of the channels, and to respond to the signal receiver (10) with information about the level of geographic neighbourhood for at least some of the channels.

15. A method of operating a database server according to any of claims 10-14 to receive and respond to queries from a signal receiver (10), according to claims 3-9, which is capable of receiving broadcast signals, the database server comprising a database (50) for broadcast channels, the method comprising the database server:
receiving, from the signal receiver (10) which is capable of receiving broadcast signals, a query concerning channels which have been identified in a channel search preformed by the signal receiver (10);
querying the database (50) to identify the geographical location data for at least some of said channels from the database (50); and
responding to the signal receiver (10) with the geographical location data for said channels.

## Patentansprüche

1. Verfahren zum Betreiben eines Signalempfängers (10), der zum Empfangen von Rundfunksignalen fähig ist, wobei das Verfahren aufweist, dass der Signalempfänger (10):
eine Kanalsuche durchführt, um nach verfügbaren Kanälen zu suchen, die vom Signalempfänger (10) empfangen werden können;
Standortdaten für den Signalempfänger (10) erlangt, die den geografischen Standort des Signalempfängers (10) angeben;
für jeden von wenigstens manchen der in der Kanalsuche gefundenen Kanäle eine Datenbank (50) für geografische Standortdaten für den Kanal, die in der Datenbank (50) gespeichert sind, abfragt;
als Reaktion auf die Abfrage der Datenbank (50) geografische Standortdaten für die Kanäle von der Datenbank (50) empfängt; und
eine Kanalliste für die in der Kanalsuche gefundenen Kanäle erstellt, wobei Kanäle in der Kanalliste gemäß wenigstens dem geografischen Standort des Signalempfängers (10) und den geografischen Standortdaten für die von der Datenbank (50) erhaltenen Kanäle geordnet werden.

2. Verfahren nach Anspruch 1, bei welchem der Signalempfänger (10) als Reaktion auf das Abfragen der Datenbank (50) von der Datenbank (50) eine Angabe empfängt, ob der Kanal ein nationaler Kanal oder ein lokaler Kanal für wenigstens manche der Kanäle ist, wobei die Kanäle ferner in der Kanalliste danach geordnet werden, ob der Kanal ein nationaler Kanal oder ein lokaler Kanal ist.

3. Signalempfänger (10), der zum Empfangen von Rundfunksignalen fähig ist, wobei der Signalempfänger (10) konstruiert und angeordnet ist, um:
eine Kanalsuche durchzuführen, um nach verfügbaren Kanälen zu suchen, die vom Signalempfänger (10) empfangen werden können;
Standortdaten für den Signalempfänger (10) zu erlangen, die den geografischen Standort des Signalempfängers (10) angeben;
für jeden von wenigstens manchen der in der Kanalsuche gefundenen Kanäle eine Datenbank (50) für geografische Standortdaten für den Kanal abzufragen, um geografische Standortdaten für die Kanäle, die in der Datenbank (50) gespeichert sind, zu erhalten; und
eine Kanalliste für die in der Kanalsuche gefundenen Kanäle zu erstellen, wobei der Signalempfänger (10) Kanäle in der Kanalliste gemäß wenigstens dem geografischen Standort des Signalempfängers (10) und den geografischen Standortdaten für die von der Datenbank (50) erhaltenen Kanäle ordnet.

4. Signalempfänger (10) nach Anspruch 3, wobei der Signalempfänger (10) derart konfiguriert ist, dass die Kanäle basierend auf einer von der Datenbank (50) empfangenen Angabe, ob der Kanal ein nationaler Kanal oder ein lokaler Kanal ist, ferner in der Kanalliste danach geordnet werden, ob der Kanal ein nationaler Kanal oder ein lokaler Kanal ist.

5. Signalempfänger (10) nach Anspruch 3 oder Anspruch 4, wobei der Signalempfänger (10) derart konfiguriert ist, dass die Kanäle basierend auf einer Prioritätsangabe für die von der Datenbank (50) empfangenen Kanäle ferner in der Kanalliste gemäß einer Priorität der Kanäle geordnet werden.

6. Signalempfänger (10) nach Anspruch 3, wobei der Signalempfänger (10) derart konfiguriert ist, dass die Kanalliste mehrere Abschnitte enthält, und derart, dass jeder Kanal basierend auf wenigstens dem geografischen Standort des Signalempfängers (10) und den von der Datenbank (50) erhaltenen geografischen Standortdaten für die Kanäle einem der Abschnitte zugewiesen wird.

7. Signalempfänger (10) nach Anspruch 6, wobei der Signalempfänger (10) derart konfiguriert ist, dass jeder Kanal basierend auf wenigstens dem geografischen Standort des Signalempfängers (10) und den von der Datenbank (50) erhaltenen geografischen Standortdaten für die Kanäle und darauf, ob der Kanal gemäß einer aus der Datenbank (50) erhaltenen Angabe, ob der Kanal ein nationaler Kanal oder ein lokaler Kanal ist, ein nationaler Kanal oder ein lokaler Kanal ist, einem der Abschnitte zugewiesen wird.

8. Signalempfänger (10) nach Anspruch 6 oder Anspruch 7, wobei der Signalempfänger (10) derart konfiguriert ist, dass die Kanäle basierend auf einer von der Datenbank (50) empfangenen Prioritätsangabe für die Kanäle in jedem Abschnitt gemäß einer Priorität der Kanäle im Abschnitt geordnet werden.

9. Verfahren nach Anspruch 1 oder Anspruch 2 oder Signalempfänger (10) nach einem der Ansprüche 3 bis 8, wobei der Signalempfänger (10) ein Satellitensignalempfänger zum Empfangen von Satellitenrundfunk-Fernsehsignalen ist.

10. Datenbankserver zum Empfangen und Beantworten von Abfragen von einem Signalempfänger (10) nach einem der Ansprüche 3 bis 9, der zum Empfangen von Rundfunksignalen fähig ist, wobei der Datenbankserver eine Datenbank (50) für Rundfunkkanäle aufweist und konfiguriert ist, um:
vom Signalempfänger (10), der zum Empfangen von Rundfunksignalen fähig ist, eine Abfrage bezüglich Kanälen zu empfangen, die in einer vom Signalempfänger (10) durchgeführten Kanalsuche identifiziert worden sind;
die Datenbank (50) abzufragen, um die geografischen Standortdaten für wenigstens manche der Kanäle, die in der Datenbank (50) gespeichert sind, zu identifizieren; und
dem Signalempfänger (10) mit den geografischen Standortdaten für die Kanäle zu antworten.

11. Datenbankserver nach Anspruch 10, wobei der Datenbankserver konfiguriert ist, um:
die Datenbank (50) abzufragen, um zu identifizieren, ob wenigstens manche der Kanäle in der Abfrage vom Signalempfänger (10) nationale oder lokale Kanäle sind, und dem Signalempfänger (10) mit einer Angabe, ob die Kanäle nationale Kanäle oder lokale Kanäle für wenigstens manche der Kanäle sind, zu antworten.

12. Datenbankserver nach Anspruch 10 oder Anspruch 11, wobei der Datenbankserver konfiguriert ist, um:
die Datenbank (50) abzufragen, um eine Priorität für wenigstens manche der Kanäle zu identifizieren, und dem Signalempfänger (10) mit einer Angabe der Priorität für die Kanäle zu antworten.

13. Datenbankserver nach Anspruch 12, bei welchem die Priorität eines Kanals kalkuliert wird als eine Funktion von ein oder mehr von: der Inhaltsart des Kanals; der Auflösung des Kanals; Zuschaueranteilen für den Kanal; und Abstand zwischen geografischen Bereichen des Kanals und des Signalempfängers (10).

14. Datenbankserver nach einem der Ansprüche 10 bis 13, wobei der Datenbankserver konfiguriert ist, um:
den geografischen Standort des Signalempfängers (10), der in einer Abfrage vom Signalempfänger (10) empfangen wird, mit dem geografischen Standort von wenigstens manchen der Kanäle zu vergleichen und dem Signalempfänger (10) mit Informationen über das Niveau der geografischen Nachbarschaft für wenigstens manche der Kanäle zu antworten.

15. Verfahren zum Betreiben eines Datenbankservers nach einem der Ansprüche 10 bis 14, um Abfragen von einem Signalempfänger (10) nach einem der Ansprüche 3 bis 9, der zum Empfangen von Rundfunksignalen fähig ist, zu empfangen und zu beantworten, wobei der Datenbankserver eine Datenbank (50) für Rundfunkkanäle aufweist, wobei das Verfahren aufweist, dass der Datenbankserver:
vom Signalempfänger (10), der zum Empfangen von Rundfunksignalen fähig ist, eine Abfrage bezüglich Kanälen empfängt, die in einer vom Signalempfänger (10) durchgeführten Kanalsuche identifiziert worden sind;
die Datenbank (50) abfragt, um die geografischen Standortdaten für wenigstens manche der Kanäle von der Datenbank (50) zu identifizieren; und
dem Signalempfänger (10) mit den geografischen Standortdaten für die Kanäle antwortet.

## Revendications

1. Procédé de fonctionnement d'un récepteur de signal (10) qui est capable de recevoir des signaux de diffusion, le procédé comprenant le récepteur de signal (10) et consistant à :
effectuer une recherche de canaux pour rechercher des canaux disponibles qui peuvent être reçus par le récepteur de signal (10) ;
acquérir des données de localisation pour le récepteur de signal (10) qui indiquent la localisation géographique du récepteur de signal (10) ;
pour chaque canal parmi au moins certains des canaux se retrouvant dans la recherche de canaux, interroger une base de données (50) concernant des données de localisation géographique pour le canal qui sont stockées dans la base de données (50) ;
en réponse à l'interrogation de la base de données (50), recevoir des données de localisation géographique pour lesdits canaux de la part de la base de données (50) ; et
créer une liste de canaux pour les canaux se retrouvant dans la recherche de canaux, les canaux étant rangés dans la liste de canaux selon au moins la localisation géographique du récepteur de signal (10) et les données de localisation géographique pour les canaux telles qu'obtenues à partir de la base de données (50).

2. Procédé selon la revendication 1, dans lequel, en réponse à l'interrogation de la base de données (50), le récepteur de signal (10) reçoit de la base de données (50) une indication de si le canal est un canal national ou un canal local pour au moins certains des canaux, les canaux étant en outre rangés dans la liste de canaux selon que le canal est soit un canal national, soit un canal local.

3. Récepteur de signal (10) qui est capable de recevoir des signaux de diffusion, le récepteur de signal (10) étant construit et agencé pour :
effectuer une recherche de canaux afin de rechercher des canaux disponibles qui peuvent être reçus par le récepteur de signal (10) ;
acquérir des données de localisation pour le récepteur de signal (10) qui indiquent la localisation géographique du récepteur de signal (10) ;
pour chaque canal parmi au moins certains des canaux se retrouvant dans la recherche de canaux, interroger une base de données (50) concernant des données de localisation géographique pour le canal afin d'obtenir des données de localisation géographique pour lesdits canaux qui sont stockées dans ladite base de données (50) ; et
créer une liste de canaux pour les canaux se retrouvant dans la recherche de canaux, le récepteur de signal (10) rangeant des canaux dans la liste de canaux selon au moins la localisation géographique du récepteur de signal (10) et les données de localisation géographique pour les canaux telles qu'obtenues à partir de ladite base de données (50).

4. Récepteur de signal (10) selon la revendication 3, dans lequel le récepteur de signal (10) est configuré de sorte que les canaux sont en outre rangés dans la liste de canaux selon que le canal est soit un canal national, soit un canal local, sur la base d'une indication indiquant si le canal est un canal national ou un canal local telle que reçue de la part de ladite base de données (50).

5. Récepteur de signal (10) selon la revendication 3 ou 4, dans lequel le récepteur de signal (10) est configuré de sorte que les canaux sont en outre rangés dans la liste de canaux selon une priorité des canaux sur la base d'une indication de priorité pour les canaux telle que reçue de la part de ladite base de données (50).

6. Récepteur de signal (10) selon la revendication 3, dans lequel le récepteur de signal (10) est configuré de sorte que la liste de canaux contient une pluralité de sections, et de sorte que chaque canal est attribué à l'une des sections sur la base au moins de la localisation géographique du récepteur de signal (10) et des données de localisation géographique pour les canaux telles qu'obtenues à partir de ladite base de données (50).

7. Récepteur de signal (10) selon la revendication 6, dans lequel le récepteur de signal (10) est configuré de sorte que chaque canal est attribué à l'une des sections sur la base au moins de la localisation géographique du récepteur de signal (10) et des données de localisation géographique pour les canaux telles qu'obtenues à partir de ladite base de données (50), et de si le canal est un canal national ou un canal local selon une indication obtenue à partir de ladite base de données (50) de si le canal est un canal national ou un canal local.

8. Récepteur de signal (10) selon la revendication 6 ou 7, dans lequel le récepteur de signal (10) est configuré de sorte que les canaux à l'intérieur de chaque section sont rangés selon une priorité desdits canaux à l'intérieur de la section sur la base d'une indication de priorité pour les canaux telle que reçue de la part de ladite base de données (50).

9. Procédé selon la revendication 1 ou 2 ou récepteur de signal (10) selon l'une quelconque des revendications 3 à 8, dans lequel le récepteur de signal (10) est un récepteur de signal satellite destiné à recevoir des signaux de télévision diffusés par satellite.

10. Serveur de base de données destiné à recevoir et répondre à des interrogations de la part d'un récepteur de signal (10) selon l'une quelconque des revendications 3 à 9 qui est capable de recevoir des signaux de diffusion, le serveur de base de données comprenant une base de données (50) pour des canaux de diffusion et étant configuré pour :
recevoir, du récepteur de signal (10) qui est capable de recevoir des signaux de diffusion, une interrogation concernant des canaux qui ont été identifiés dans une recherche de canaux effectuée par le récepteur de signal (10) ;
interroger la base de données (50) afin d'identifier les données de localisation géographique pour au moins certains desdits canaux qui sont stockées dans la base de données (50) ; et
répondre au récepteur de signal (10) avec les données de localisation géographique pour lesdits canaux.

11. Serveur de base de données selon la revendication 10, le serveur de base de données étant configuré pour :
interroger la base de données (50) afin d'identifier si au moins certains des canaux dans l'interrogation de la part du récepteur de signal (10) sont des canaux nationaux ou locaux, et afin de répondre au récepteur de signal (10) avec une indication de si les canaux sont des canaux nationaux ou des canaux locaux pour au moins certains des canaux.

12. Serveur de base de données selon la revendication 10 ou 11, le serveur de base de données étant configuré pour :
interroger la base de données (50) afin d'identifier une priorité pour au moins certains des canaux et répondre au récepteur de signal (10) avec une indication de la priorité pour lesdits canaux.

13. Serveur de base de données selon la revendication 12, dans lequel la priorité d'un canal est calculée en fonction d'un ou plusieurs parmi : le type de contenu du canal ; la résolution du canal ; le taux d'écoute pour le canal ; et la distance entre des régions géographiques du canal et le récepteur de signal (10).

14. Serveur de base de données selon l'une quelconque des revendications 10 à 13, le serveur de base de données étant configuré pour :
comparer la localisation géographique du récepteur de signal (10), laquelle est reçue suite à une interrogation de la part du récepteur de signal (10), à la localisation géographique d'au moins certains des canaux, et répondre au récepteur de signal (10) avec des informations sur le niveau de voisinage géographique pour au moins certains des canaux.

15. Procédé de fonctionnement d'un serveur de base de données selon l'une quelconque des revendications 10 à 14 pour recevoir et répondre à des interrogations de la part d'un récepteur de signal (10) selon les revendications 3 à 8 qui est capable de recevoir des signaux de diffusion, le serveur de base de données comprenant une base de données (50) pour des canaux de diffusion, le procédé comprenant le serveur de base de données et consistant à :
recevoir, du récepteur de signal (10) qui est capable de recevoir des signaux de diffusion, une interrogation concernant des canaux qui ont été identifiés dans une recherche de canaux effectuée par le récepteur de signal (10) ;
interroger la base de données (50) afin d'identifier les données de localisation géographique pour au moins certains desdits canaux de la base de données (50) ; et
répondre au récepteur de signal (10) avec les données de localisation géographique pour lesdits canaux.
